# EUROPEAN PATENT APPLICATION

(11) **EP 4 830 804 A1**
(43) Date of publication of application: **28.10.2026**
(21) Application number: 24906446.0
(22) Date of filing: 19.12.2024
(51) Int. Cl.: A63F 13/85, A63F 13/52

(54) **VIRTUAL RESOURCE EXCHANGE METHOD AND APPARATUS, AND DEVICE, READABLE STORAGE MEDIUM AND PRODUCT**

(30) Priority: 22.12.2023 CN 202311786485
(71) Applicant: Beijing Zitiao Network Technology Co., Ltd., Beijing 100190 (CN)
(72) Inventor: LI, Jianzhao, Beijing 100028 (CN); WANG, Lifu, Beijing 100028 (CN); ZHAO, Yuxuan, Beijing 100028 (CN)
(74) Representative: Isarpatent
(86) International application number: PCT/CN2024/140540
(87) International publication number: WO 2025/130967

(57) **Abstract**

Provided in the embodiments of the present disclosure are a virtual resource exchange method and apparatus, and a device, a readable storage medium and a product. The method comprises: receiving a virtual resource exchange operation triggered by a first user; in response to the virtual resource exchange operation, displaying a preset virtual resource determination page, and acquiring a virtual resource determined by the first user in the virtual resource determination page; displaying, in a chat page corresponding to a preset chat, an exchange control associated with the virtual resource exchange operation, wherein the exchange control is configured, in response to a trigger operation of at least one second user in the preset chat, to acquire at least one exchanged virtual resource determined by the second user; and in response to the preset exchange conditions being satisfied, updating and displaying the exchange control on the basis of a virtual resource exchange event.

## Description

The present application claims priority to Chinese Patent Application No. 202311786485.7, filed on December 22, 2023, which is incorporated herein by reference in its entirety as a part of the present application.

### TECHNICAL FIELD

Embodiments of the present disclosure relate to a virtual resource exchange method, an apparatus, a device, a readable storage medium, and a product.

### BACKGROUND

During a chat, users may exchange virtual resources.

In a current virtual resource exchange manner, a user generally specifies a virtual resource and posts the virtual resource in a chat page, so that other users participating in the chat may acquire the virtual resource. However, the current virtual resource exchange method has a relatively single interaction manner.

### SUMMARY

An embodiment of the present disclosure provides a virtual resource exchange method including:
receiving a virtual resource exchange operation triggered by a first user;
displaying a preset virtual resource determination page and acquiring a virtual resource determined by the first user in the virtual resource determination page in response to the virtual resource exchange operation;
displaying, in a chat page corresponding to a preset chat, an exchange control associated with the virtual resource exchange operation, where the preset chat is a chat corresponding to the first user and at least one second user, and the exchange control is configured to acquire at least one exchange virtual resource determined by the second user in response to a trigger operation of the at least one second user in the preset chat; and
updating and displaying the exchange control based on a virtual resource exchange event in response to meeting a preset exchange condition, where the virtual resource exchange event is executed based on the virtual resource and a target exchange virtual resource in the at least one exchange virtual resource.

An embodiment of the present disclosure provides a virtual resource exchange apparatus including:
a receiving module, configured to receive a virtual resource exchange operation triggered by a first user;
an acquiring module, configured to display a preset virtual resource determination page and acquire a virtual resource determined by the first user in the virtual resource determination page in response to the virtual resource exchange operation;
a displaying module, configured to display, in a chat page corresponding to a preset chat, an exchange control associated with the virtual resource exchange operation, where the preset chat is a chat corresponding to the first user and at least one second user, and the exchange control is configured to acquire at least one exchange virtual resource determined by the second user in response to a trigger operation of the at least one second user in the preset chat; and
an updating module, configured to update and display the exchange control based on a virtual resource exchange event in response to meeting a preset exchange condition, where the virtual resource exchange event is executed based on the virtual resource and a target exchange virtual resource in the at least one exchange virtual resource.

An embodiment of the present disclosure provides an electronic device, including: a processor and a memory;
a computer-executed instruction is stored in the memory; and
the processor executes the computer-executed instruction stored in the memory, to causes the at least one processor to implement the virtual resource exchange method according to the above.

An embodiment of the present disclosure provides a computer-readable storage medium, a computer-executed instruction is stored in the computer-readable storage medium, and when the computer-executed instruction is executed by a processor, the virtual resource exchange method according to the above is implemented.

An embodiment of the present disclosure provides a computer program product which includes a computer program, and when the computer program is executed by a processor, the virtual resource exchange method according to the above is implemented.

### BRIEF DESCRIPTION OF DRAWINGS

In order to more clearly illustrate the technical solutions in the embodiments of the present disclosure, the following briefly introduces the drawings required for describing the embodiments. Apparently, the drawings in the following description show some embodiments of the present disclosure, and other drawings may also be obtained by a person of ordinary skill in the art according to these drawings without creative efforts.
Fig. 1 is a schematic flowchart of a virtual resource exchange method provided by an embodiment of the present disclosure;
Fig. 2 is a schematic diagram of a display interface provided by an embodiment of the present disclosure;
Fig. 3 is a schematic diagram of interface interaction provided by an embodiment of the present disclosure;
Fig. 4 is another schematic diagram of interface interaction provided by an embodiment of the present disclosure;
Fig. 5 is a schematic flowchart of a virtual resource exchange method provided by another embodiment of the present disclosure;
Fig. 6 is another schematic diagram of interface interaction provided by an embodiment of the present disclosure;
Fig. 7 is another schematic diagram of a display interface provided by the present disclosure;
Fig. 8 is a schematic flowchart of a virtual resource exchange method provided by another embodiment of the present disclosure;
Fig. 9 is another schematic diagram of interface interaction provided by an embodiment of the present disclosure;
Fig. 10 is still another schematic diagram of interface interaction provided by an embodiment of the present disclosure;
Fig. 11 is a schematic diagram of a structure of a virtual resource exchange apparatus provided by an embodiment of the present disclosure; and
Fig. 12 is a schematic diagram of a structure of an electronic device provided by an embodiment of the present disclosure.

### DETAILED DESCRIPTION

In order to make objectives, technical solutions, and advantages of embodiments of the present disclosure clearer, the technical solutions in the embodiments of the present disclosure will be described clearly and comprehensively with reference to the drawings in the embodiments of the present disclosure. Apparently, the described embodiments are some embodiments of the present disclosure, rather than all the embodiments. All other embodiments obtained by a person of ordinary skill in the art based on the embodiments of the present disclosure without creative efforts shall fall within the protection scope of the present disclosure.

It should be understood that before the technical solutions disclosed in the embodiments of the present disclosure are used, a user shall be informed of the type, range of use, use scenarios, etc., of personal information involved in the present disclosure in an appropriate manner and the authorization of the user shall be obtained in accordance with related laws and regulations.

For example, in response to reception of an active request from a user, prompt information is sent to the user to clearly inform the user that the requested operation will require access to and use of personal information of the user. In this way, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to the reception of the active request from the user, the prompt information may be sent to the user in the form of, for example, a pop-up window, in which the prompt information may be presented in text. Furthermore, the pop-up window may also include a selection control for the user to choose whether to "agree" or "disagree" to provide the personal information to the electronic device.

It may be understood that the above process of notifying and acquiring the authorization of the user is only illustrative and does not constitute a limitation on the implementations of the present disclosure, and other manners that satisfy the related laws and regulations may also be applied to the implementations of the present disclosure.

In order to solve the problem of a poor user experience caused by a relatively single exchange manner in an existing virtual resource exchange method, the present disclosure provides a virtual resource exchange method, an apparatus, a device, a readable storage medium, and a product.

It should be noted that the virtual resource exchange method, the apparatus, the device, the readable storage medium, and the product provided by the present disclosure may be applied to any virtual resource exchange scenario.

A current virtual resource exchange method is generally based on one-to-one exchange. For example, after determining a first virtual resource by a first user, the first user may transfer the first virtual resource to a second user. The second user may then determine a second virtual resource based on an actual demand and transfer the second virtual resource to the first user. Alternatively, after determining a first virtual resource and a number of transfer times, the first user may send an exchange control associated with the first virtual resource to a group chat with multiple second users. The multiple second users in the group chat may trigger the exchange control according to actual demands to implement a transfer operation for at least part of the first virtual resource. However, the current virtual resource exchange manner is often relatively single, and the content displayed in a chat page in the virtual resource exchange process is relatively monotonous.

In order to enrich virtual resource exchange manners and improve an interaction effect, a first user may determine a virtual resource and send an exchange control associated with the virtual resource to a chat page corresponding to a preset chat with at least one second user. The second user may determine an exchange virtual resource by triggering the exchange control. In this way, the virtual resource and at least one exchange virtual resource can be obtained. In response to meeting a preset exchange condition, at least two users participating in the virtual resource exchange time may randomly perform a resource exchange operation. For example, the first user may acquire a target exchange virtual resource determined by a second user A, and the second user A may acquire an exchange virtual resource determined by a second user B.

Furthermore, in response to meeting the preset exchange condition, a presentation style of the exchange control may be switched, so that the content displayed in the chat page can be enriched and the user experience can be improved. For example, in response to the exchange condition being not met, "Exchange" may be displayed on the exchange control, so that the second user may determine the exchange virtual resource when triggering the exchange control. In response to the preset exchange condition being met, "Open" may be switched to for display on the exchange control. In this way, in response to the trigger operation of the user in the preset chat on the exchange control, a random transfer operation of virtual resources can be implemented.

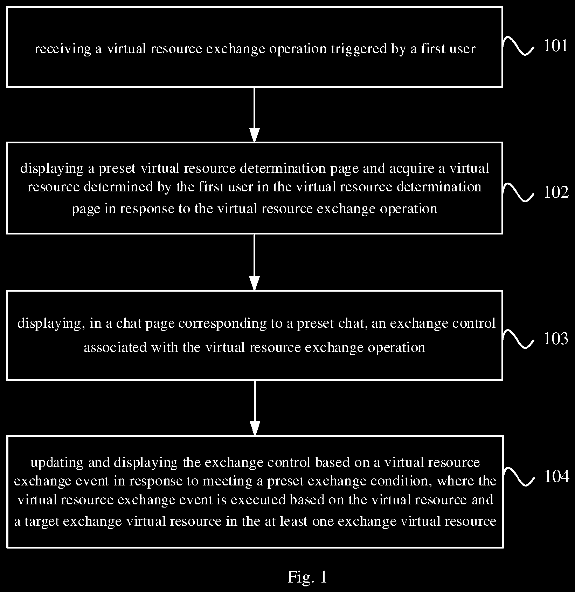

Fig. 1 is a schematic flowchart of a virtual resource exchange method according to an embodiment of the present disclosure. As shown in Fig. 1, the method includes the following steps.

Step 101: receiving a virtual resource exchange operation triggered by a first user.

An execution body of this embodiment is a virtual resource exchange apparatus. The virtual resource exchange apparatus may be coupled to a terminal device. Thus, a virtual resource may be determined and a virtual resource exchange event may be executed based on a trigger operation of the first user on the terminal device.

Alternatively, the virtual resource exchange apparatus may also be coupled to a server. The server may be in communication connection with the terminal device. Thus, the server may acquire a virtual resource exchange instruction sent by the terminal device based on the trigger operation of the first user, determine a virtual resource and execute a virtual resource exchange event based on the virtual resource exchange instruction, and control the terminal device to display the process of the virtual resource exchange.

In this implementation, the first user may trigger the virtual resource exchange operation according to an actual demand, so as to implement exchange of virtual resources with at least one second user. The first user may trigger the virtual resource exchange operation in a chat page or a media content presentation page, which is not limited in the present disclosure.

Correspondingly, the virtual resource exchange apparatus may receive the virtual resource exchange operation triggered by the first user. The virtual resource includes, but is not limited to, resources such as a coupon, a virtual red envelope, and a virtual game prop, and so on.

Step 102: displaying a preset virtual resource determination page and acquire a virtual resource determined by the first user in the virtual resource determination page in response to the virtual resource exchange operation.

In this implementation, after triggering the virtual resource exchange operation, the first user may determine a virtual resource, so as to perform an exchange operation with at least one second user based on the virtual resource.

In response to the virtual resource exchange operation triggered by the first user, the preset virtual resource determination page may be displayed, so that the first user may determine the virtual resource in the virtual resource determination page.

Optionally, the first user may determine the virtual resource in the virtual resource determination page based on an actual demand, or the first user may select any preset virtual resource from at least one preset virtual resource as the virtual resource in the virtual resource determination page, or the first user may randomly determine any preset virtual resource as the virtual resource in the virtual resource determination page, which is not limited in the present disclosure.

For example, the virtual resource may be a virtual red envelope. The first user may input a value in the virtual red envelope in the virtual resource determination page based on an actual demand, so as to determine the virtual resource. Alternatively, multiple preset values, such as 6.66, 8.88, and 5.20, may be set in advance, and the first user may select any value from the multiple preset values to determine the virtual resource. Alternatively, one value may be randomly selected from the multiple preset values, and the virtual resource is determined based on the preset value randomly selected.

Step 103: displaying, in a chat page corresponding to a preset chat, an exchange control associated with the virtual resource exchange operation, where the preset chat is a chat corresponding to the first user and at least one second user, and the exchange control is configured to acquire at least one exchange virtual resource determined by the second user in response to a trigger operation of the at least one second user in the preset chat.

In this implementation, after determining the virtual resource by the first user, the first user may display the exchange control associated with the virtual resource exchange operation in the chat page corresponding to the preset chat. The preset chat may be a chat between the first user and at least one second user. The first user may perform the virtual resource exchange operation with all the second users in the preset chat or perform the virtual resource exchange operation with part of the second users in the preset chat, which is not limited in the present disclosure.

Furthermore, after the exchange control is displayed, the second user in the preset chat may trigger the exchange control according to an actual demand, so that at least one exchange virtual resource may be determined based on the trigger operation. Thus, the virtual resource exchange operation may be performed based on the exchange virtual resource. A manner of determining the exchange virtual resource may be the same as the manner of determining the virtual resource, and details will not be described herein again.

Step 104: updating and displaying the exchange control based on a virtual resource exchange event in response to meeting a preset exchange condition, where the virtual resource exchange event is executed based on the virtual resource and a target exchange virtual resource in the at least one exchange virtual resource.

In this implementation, in order to implement the virtual resource exchange operation, a preset exchange condition may be set in advance, the preset exchange condition includes, but is not limited to, that all the second users in the preset chat determine exchange virtual resources, a display duration of the exchange control reaches a preset duration threshold, the first user initiates an ending exchange operation, etc.

In response to meeting the preset exchange condition, the exchange operation may be performed based on the virtual resource determined by the first user and the at least one exchange virtual resource determined by the at least one second user. In order to enrich exchange manners of the virtual resource exchange operation, a random exchange operation may be performed based on the virtual resource and the at least one exchange virtual resource. For example, a target exchange virtual resource determined by a second user A may be transferred to the first user, and an exchange virtual resource determined by a second user B may be transferred to the second user A.

Furthermore, in order to enable the first user to know the progress of the virtual resource exchange operation more intuitively, in response to meeting the preset exchange condition, the exchange control may be updated and displayed based on the virtual resource exchange event.

According to the virtual resource exchange method provided in this embodiment, the virtual resource exchange operation triggered by the first user is acquired, and the virtual resource determined by the first user is acquired based on the virtual resource exchange operation. The exchange control associated with the virtual resource exchange operation is displayed in the chat page corresponding to the first user and the at least one second user. Thus, the at least one second user may determine the exchange virtual resource based on the exchange control. In response to meeting the preset exchange condition, the exchange control may be updated and displayed based on the virtual resource exchange operation, so that the content displayed in the chat page may be enriched. Furthermore, the first user may perform the random exchange operation based on the virtual resource and the target exchange virtual resource in the at least one exchange virtual resource, which enriches exchange manners of virtual resources and improves the user experience.

Optionally, based on any one of the above embodiments, the step 102 includes:
displaying a random virtual resource in a preset display region in the virtual resource determination page, where the random virtual resource is randomly determined from a plurality of preset virtual resources; and
in response to a trigger operation of the first user on a preset determination control in the virtual resource determination page, determining the random virtual resource as the virtual resource.

Alternatively, acquiring the virtual resource determined by the first user in the virtual resource determination page includes:
a preset virtual resource input control in the virtual resource determination page; and
determining a virtual resource input by the first user based on the virtual resource input control as the virtual resource.

In this embodiment, in order to implement the virtual resource determination operation, a plurality of preset virtual resources may be provided in advance. After the virtual resource determination page is displayed, the random virtual resource may be displayed in the preset display region in the virtual resource determination page, where the random virtual resource is randomly determined from the plurality of preset virtual resources.

Furthermore, a determination control is further provided in advance in the virtual resource determination page. After the random virtual resource is displayed, if the first user determines that the random virtual resource meets an actual demand, the random virtual resource may be determined as the virtual resource by triggering the determination control.

Optionally, the first user may also determine the virtual resource based on an actual demand. The virtual resource determination page includes a preset virtual resource input control. The first user may input a virtual resource based on the virtual resource input control, and the virtual resource input by the first user is determined as the virtual resource.

For example, the virtual resource may be a virtual red envelope, and the first user may input a value in the virtual red envelope based on the virtual resource input control. Alternatively, the virtual resource may be a coupon, and the first user may input a redemption link of the coupon, etc., based on the virtual resource input control.

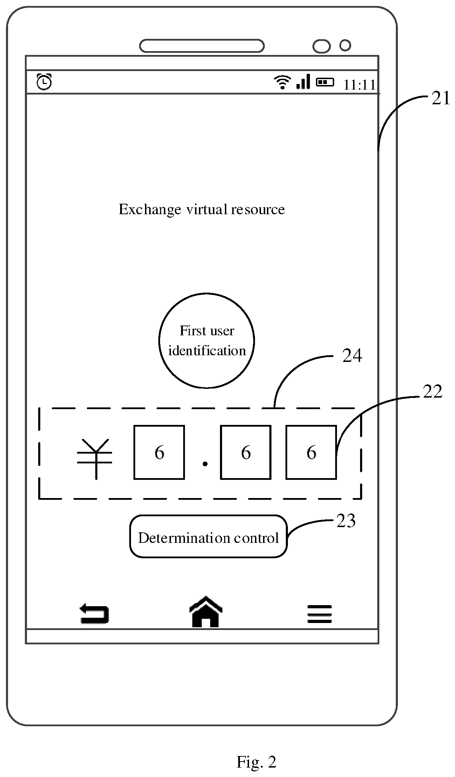

Fig. 2 is a schematic diagram of a display interface according to an embodiment of the present disclosure. As shown in Fig. 2, the virtual resource determination page 21 may include a preset display region 22 and a preset determination control 23, and a random virtual resource 24 randomly determined from a plurality of preset virtual resources may be displayed in the display region 22. In response to a trigger operation of the first user on the determination control 23, the random virtual resource 24 currently displayed can be determined as the virtual resource.

According to the virtual resource exchange method provided in this embodiment, the virtual resource is determined randomly or customarily, so that manners of determining the virtual resource may be enriched. Furthermore, the determined virtual resource may better meet personalized requirements of the first user.

Furthermore, based on any one of the above embodiments, after displaying the random virtual resource in a preset display region in the virtual resource determination page, the method further includes:
displaying a preset switching control in the virtual resource determination page; and
in response to a trigger operation of the first user on the switching control, randomly switching to present another preset virtual resource in the display region.

In this embodiment, the virtual resource determination page further includes a preset switching control. If the random virtual resource presented in the virtual resource determination page does not meet the actual demand of the first user, the first user may randomly switch to present another preset virtual resource by triggering the switching control.

Optionally, in order to improve the efficiency of virtual resource exchange, a switching threshold may be set in advance. In response to the number of trigger operations of the first user on the switching control exceeding the preset switching threshold, another preset virtual resource is not randomly switched to for display in response to the trigger operation of the first user on the switching control.

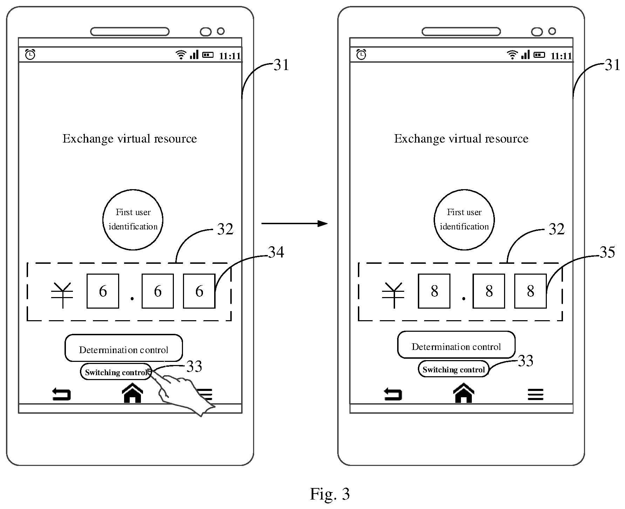

Fig. 3 is a schematic diagram of interface interaction according to an embodiment of the present disclosure. As shown in Fig. 3, the virtual resource determination page 31 may include a preset display region 32 and a preset switching control 33, and a random virtual resource 34 randomly determined from a plurality of preset virtual resources may be displayed in the display region 32. If the first user is not satisfied with the random virtual resource 34 currently displayed, the first user may randomly switch to present another preset virtual resource 35 in the display region 32 by triggering the switching control 33.

According to the virtual resource exchange method provided in this embodiment, the preset switching control is displayed in the virtual resource determination page, so that the first user can perform a switching operation on the random virtual resource currently displayed based on an actual demand, and the finally determined virtual resource can better meet the personalized requirements of the first user.

Furthermore, based on any one of the above embodiments, after the step 104, the method further includes:
in response to meeting a preset exchange condition, in response to a trigger operation of the first user on the exchange control, displaying a target second user determined from the at least one second user and a target exchange virtual resource determined by the target second user.

In this embodiment, in order to facilitate the first user to know the current virtual resource exchange result more intuitively, in response to meeting the preset exchange condition, the virtual resource exchange result is displayed in response to the trigger operation of the first user on the exchange control; the virtual resource exchange result includes the target second user and the target exchange virtual resource determined by the target second user. The target second user is any second user among the at least one second user.

Optionally, based on any one of the above embodiments, the step of in response to meeting a preset exchange condition, displaying a target second user determined from the at least one second user and a target exchange virtual resource determined by the target second user in response to a trigger operation of the first user on the exchange control includes at least one of the following:
in response to the display time of the exchange control matching a preset exchange time, displaying the target second user determined from the at least one second user and the target exchange virtual resource determined by the target second user in response to the trigger operation of the first user on the exchange control;
in response to all second users participating in the virtual resource exchange event determining exchange virtual resources based on the exchange control, displaying the target second user determined from the at least one second user and the target exchange virtual resource determined by the target second user in response to the trigger operation of the first user on the exchange control; and
in response to an end operation triggered by the first user based on the exchange control, displaying the target second user determined from the at least one second user and the target exchange virtual resource determined by the target second user in response to the trigger operation of the first user on the exchange control.

In this embodiment, the preset exchange condition may be that a display time of the exchange control matches a preset exchange time. The preset exchange time may be set by the first user based on an actual demand, or may be a time preset by a system, which is not limited in the present disclosure. For example, the preset exchange time may be 10 minutes. In response to the display time of the exchange control reaching 10 minutes, the virtual resource exchange result may be displayed in response to the trigger operation of the first user on the exchange control.

Optionally, the preset exchange condition may be that all second users participating in the virtual resource exchange event determine exchange virtual resources based on the exchange control. When initiating the virtual resource exchange operation, the first user may further determine at least one second user participating in the virtual resource exchange operation. After the exchange control is displayed, the second user participating in the virtual resource exchange operation may determine the exchange virtual resource through the exchange control. After it is determined that each second user participating in the virtual resource exchange operation has completed the determination of the exchange virtual resource, the virtual resource exchange result may be displayed in response to the trigger operation of the first user on the exchange control.

Optionally, the preset exchange condition may be that the first user actively ends the virtual resource exchange operation. The first user may enter a detail page by triggering the exchange control corresponding to the virtual resource exchange operation, and the first user may trigger an end operation based on a preset end control in the detail page. In response to the end operation triggered by the first user, the target second user determined from the at least one second user and the target exchange virtual resource determined by the target second user may be displayed based on the trigger operation of the first user on the exchange control.

According to the virtual resource exchange method provided in this embodiment, at least one exchange condition is set in advance, so that the virtual resource exchange operation may be quickly implemented in response to any one of the exchange conditions being met, which enriches trigger manners of the virtual resource exchange operation and improves the user experience.

Furthermore, based on any one of the above embodiments, after displaying the target second user determined from the at least one second user and the target exchange virtual resource determined by the target second user, the method further includes:
displaying an exchange record, where the exchange record includes an exchange relationship and an exchange virtual resource that correspond to at least one user participating in the virtual resource exchange event.

In this embodiment, in response to the trigger operation of the first user on the exchange control, the result page corresponding to the virtual resource exchange operation may be displayed. The target exchange virtual resource obtained by the first user through the current exchange and the target second user who determines the target exchange virtual resource may be displayed on the result page. Furthermore, exchange records of other users participating in the virtual resource exchange operation may also be displayed on the result page. The exchange record includes an exchange relationship and an exchange virtual resource that correspond to at least one user participating in the virtual resource exchange event.

According to the virtual resource exchange method provided in this embodiment, the exchange record is displayed, so that the first user can more intuitively know the exchange situation of other users participating in the virtual resource exchange operation.

Furthermore, based on any one of the above embodiments, the method further includes:
determining a difference between the virtual resource and the target exchange virtual resource; and
presenting presentation content matching the difference, where the presentation content includes text content and/or pattern content.

In this embodiment, in order to enrich the content displayed on the result page, the presentation content associated with the virtual resource may also be presented on the result page.

Optionally, the difference between the virtual resource and the target exchange virtual resource. The presentation content matching the difference is presented, where the presentation content includes the text content and/or the pattern content.

Taking a practical application as an example, if the difference between the virtual resource and the target exchange virtual resource is a positive value, it represents that the target exchange virtual resources received by the first user is more than the target exchange virtual resources sent by the first user in the current virtual resource exchange operation. Then, the text content of "Thank you for your patronage" may be presented on the result page, and the pattern content representing happiness may be displayed.

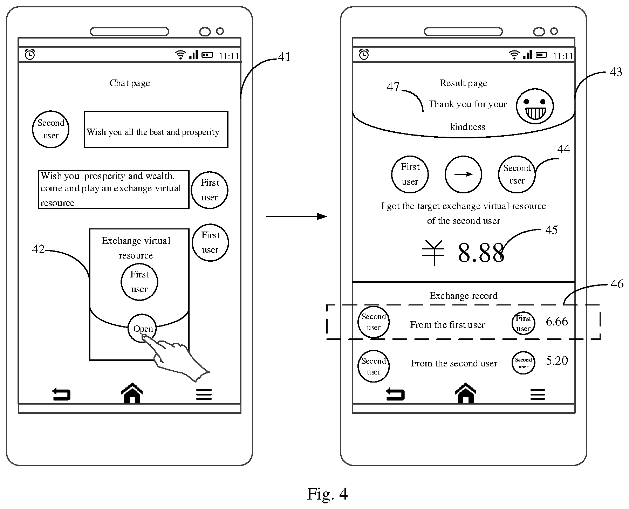

Fig. 4 is a schematic diagram of another interface interaction according to an embodiment of the present disclosure. As shown in Fig. 4, the exchange control 42 that is updated for display may be displayed in the chat page 41, and the result page 43 may be displayed in response to the trigger operation of the first user on the exchange control 42. The target second user 44 determined from the at least one second user and the target exchange virtual resource 45 determined by the target second user may be displayed on the result page 43. Furthermore, the exchange record 46 corresponding to the at least one user participating in the virtual resource exchange event may also be displayed on the result page 43, the exchange record includes an exchange relationship and an exchange virtual resource. The presentation content 47 matching the difference between the virtual resource and the target exchange virtual resource may also be displayed on the result page 43, and the presentation content includes text content and/or pattern content.

According to the virtual resource exchange method provided in this embodiment, the difference between the virtual resource and the target exchange virtual resource is determined, and the presentation content associated with the difference is displayed, so that content can be accurately presented based on the virtual resource exchange result and the presentation content on the result page is enriched.

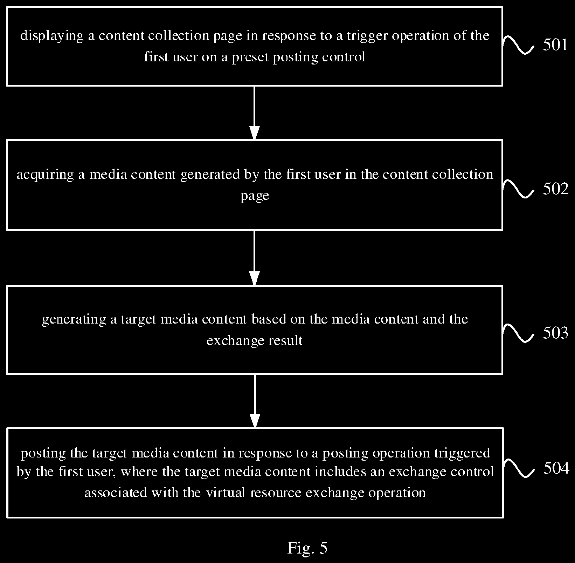

Fig. 5 is a schematic flowchart of a virtual resource exchange method according to another embodiment of the present disclosure. Based on any one of the above embodiments, as shown in Fig. 5, after displaying the target second user determined from the at least one second user and the target exchange virtual resource determined by the target second user, the method further includes the following steps.

Step 501: displaying a content collection page in response to a trigger operation of the first user on a preset posting control.

Step 502: acquiring media content generated by the first user in the content collection page.

Step 503: generating target media content based on the media content and the exchange result.

Step 504: posting the target media content in response to a posting operation triggered by the first user, where the target media content includes an exchange control associated with the virtual resource exchange operation.

In this embodiment, after completing the virtual resource exchange operation, the first user may further post target media content associated with the exchange result based on the exchange result.

Optionally, the preset posting control may also be displayed on the result page. In response to a trigger operation of the first user on the posting control, the content collection page may be displayed. Thus, the first user may perform a media content collection operation in the content collection page. The media content includes, but is not limited to, image media content, video media content, text media content, etc. For example, the content collection page may be an image shooting page, and the first user may perform an image shooting operation in the image shooting page and determine an image obtained by shooting as the media content.

Furthermore, after the media content and the exchange result are determined, the target media content may be generated based on the media content and the exchange result. In response to the posting operation triggered by the first user, the target media content may be posted, the target media content includes the exchange control associated with the virtual resource exchange operation. Thus, after the target media content is posted, other users may participate in or initiate the virtual resource exchange operation based on the exchange control associated with the virtual resource exchange operation after browsing the target media content in a media content stream.

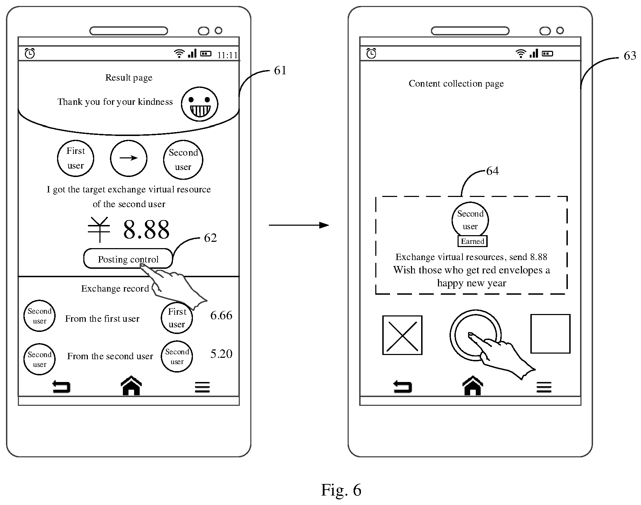

Fig. 6 is a schematic diagram of another interface interaction according to an embodiment of the present disclosure. As shown in Fig. 6, the result page 61 may further include a preset posting control 62. In response to a trigger operation of the first user on the posting control 62, the content collection page 63 may be displayed. The content collection page 63 may include at least one preset creation element, and the creation element includes, but is not limited to, content such as effect content, stickers, templates, and so on. Exemplarily, the creation element may be associated with the exchange result of the virtual resource, for example, different exchange results of the virtual resource correspond to presentation of different effect content on the content collection page. Thus, the first user may generate the media content in the content collection page 63. Furthermore, the target media content may be generated based on the media content collected by the first user and the exchange result. Furthermore, the exchange result 64 may also be displayed on the content collection page 63.

For example, the first user may perform an image collection operation on the content collection page based on the effect content associated with the virtual resource exchange operation, and generate the target media content based on the collected content and the exchange result, so that the target media content may include result information associated with the virtual resource exchange operation.

According to the virtual resource exchange method provided in this embodiment, the target media content is generated based on the media content collected by the first user and the exchange result, so that the media content associated with the virtual resource exchange operation can be quickly posted. The exchange control associated with the virtual resource exchange operation is displayed in the target media content, so that it is convenient to participate in or initiate the virtual resource exchange operation based on the exchange control associated with the virtual resource exchange operation.

Optionally, based on any one of the above embodiments, the chat page includes a preset trigger control. The step 101 includes:
displaying the chat page; and
receiving a trigger operation of the first user on the preset exchange control in the chat page.

In this embodiment, the first user may initiate the virtual resource exchange operation in the chat page.

Optionally, the chat page may include the preset trigger control. After the chat page is displayed, the virtual resource exchange operation triggered by the first user may be acquired in response to the trigger operation of the first user on the trigger control. The trigger operation includes, but is not limited to, operations such as a single-click, a double-click, a long press, and a drag-and-drop.

Optionally, in order to prevent the exchange control from covering other content displayed in the chat page, the exchange control may be presented above a preset content input box in the chat page with a preset display size.

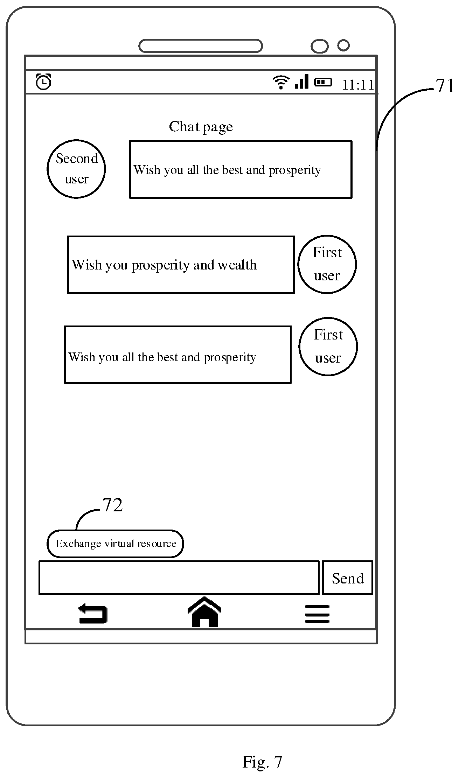

Fig. 7 is a schematic diagram of another display interface according to the present disclosure. As shown in Fig. 7, the chat page 71 may include a preset trigger control 72. The trigger control 72 may include prompt content of "exchange virtual resources". A user may initiate the virtual resource exchange operation through the trigger operation on the trigger control 72.

Furthermore, based on any one of the above embodiments, the method further includes:
determining at least one second user to exchange a virtual resource with in response to the virtual resource exchange operation triggered by the first user.

In this embodiment, after the first user triggers the virtual resource exchange operation in the chat page corresponding to the preset chat, the at least one second user participating in the virtual resource exchange operation may be further determined, so as to implement the virtual resource exchange operation with the at least one second user.

Optionally, based on any one of the above embodiments, determining the at least one second user to exchange the virtual resource with in response to the virtual resource exchange operation triggered by the first user includes:
in response to the virtual resource exchange operation triggered by the first user, determining all the second users corresponding to the preset chat as the at least one second user.

Alternatively, determining the at least one second user to exchange the virtual resource with in response to the virtual resource exchange operation triggered by the first user includes:
in response to the virtual resource exchange operation triggered by the first user, displaying a second user list corresponding to the preset chat; and
determining the at least one second user to exchange the virtual resource with based on a selection operation triggered by the first user in the second user list.

In this embodiment, after the first user triggers the virtual resource exchange operation in the chat page corresponding to the preset chat, all the second users in the preset chat may be determined as the at least one second user participating in the virtual resource exchange operation.

Optionally, after the first user triggers the virtual resource exchange operation in the chat page corresponding to the preset chat, the first user may further select part of the second users from all the second users corresponding to the preset chat as the at least one second user participating in the virtual resource exchange operation based on an actual demand. In response to the virtual resource exchange operation triggered by the first user, the second user list corresponding to the preset chat is displayed. The at least one second user to exchange the virtual resource with is determined based on the selection operation triggered by the first user in the second user list.

According to the virtual resource exchange method provided in this embodiment, at least one second user is determined after the virtual resource transfer operation triggered by the first user is acquired, so that the first user can perform the virtual resource transfer operation with the at least one second user. Furthermore, the at least one second user is determined based on the selection operation of the first user, so that participants in the virtual resource transfer operation better meet the actual demands of the first user, and the user experience is improved.

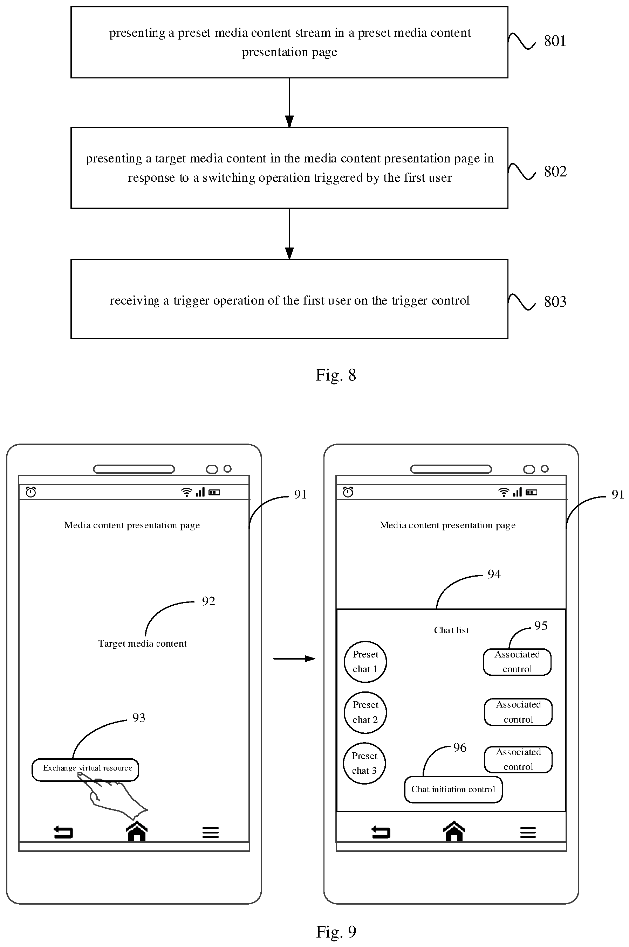

Fig. 8 is a schematic flowchart of a virtual resource exchange method according to another embodiment of the present disclosure. Based on any one of the above embodiments, as shown in Fig. 8, the step 101 includes the following steps.

Step 801: presenting a preset media content stream in a preset media content presentation page.

Step 802: presenting target media content in the media content presentation page in response to a switching operation triggered by the first user, where the target media content is generated and posted by a third user based on a virtual resource exchange result, and the media content presentation page includes a trigger control associated with a virtual resource exchange operation.

Step 803: receiving a trigger operation of the first user on the trigger control.

In this embodiment, the first user may browse a preset media content stream in the media content presentation page. The preset media content stream includes multiple pieces of preset media content. The first user may switch to browse the multiple pieces of preset media content in the media content stream through a preset switching operation.

Optionally, in response to the switching operation triggered by the first user, the target media content may be presented in the media content presentation page. The target media content is generated and posted by the third user based on the virtual resource exchange result, and the target media content includes the exchange control associated with the virtual resource exchange operation.

Thus, after the first user browses the target media content, the first user may initiate the virtual resource exchange operation based on a trigger operation on the exchange control.

According to the virtual resource transfer method provided in this embodiment, the exchange control associated with the virtual resource exchange operation is provided in the target media content, so that the first user can trigger the virtual resource transfer operation when browsing the target media content in the media content presentation page, which enriches initiation manners of the virtual resource transfer operation and enriches presentation content in the media content presentation page.

Furthermore, based on any one of the above embodiments, after the step 101, the method further includes:
determining at least one second user to exchange a virtual resource with in response to the virtual resource exchange operation.

In this embodiment, in response to the trigger operation of the first user on the exchange control in the target media content, the at least one second user participating in the virtual resource exchange operation may be further determined, so as to implement the virtual resource exchange operation with the at least one second user.

Furthermore, based on any one of the above embodiments, after the step 101, the method further includes:
in response to the virtual resource exchange operation, displaying a preset chat list, where the chat list includes an associated control corresponding to at least one preset chat and a preset chat initiation control, and the preset chat is a chat corresponding to the first user and the at least one second user.

Determining the at least one second user to exchange the virtual resource with in response to the virtual resource exchange operation includes:
in response to a trigger operation of the first user on the associated control corresponding to any preset chat, determining at least one second user corresponding to the preset chat as the at least one second user to exchange the virtual resource with.

Alternatively, determining the at least one second user to exchange the virtual resource with in response to the virtual resource exchange operation includes:
in response to a trigger operation of the first user on the chat initiation control, displaying a preset second user list; and
in response to a selection operation of the first user in the second user list, determining at least one second user currently selected by the first user as the at least one second user to exchange the virtual resource with.

In this embodiment, the first user may establish multiple preset chats in advance. The preset chat may be a one-to-one chat with a single second user or a group chat with multiple second users, which is not limited in the present disclosure.

In response to the virtual resource forwarding operation initiated by the first user, the first user may select any one preset chat from the multiple preset chats and determine at least one second user participating in the virtual resource transfer operation based on the preset chat.

Optionally, in response to the virtual resource exchange operation, a preset chat list is displayed, where the chat list includes an associated control corresponding to at least one preset chat. In response to a trigger operation of the first user on any preset chat, at least one second user corresponding to the preset chat may be determined as the at least one second user to exchange the virtual resource with. Alternatively, the first user may further perform the selection operation on the at least one second user corresponding to the currently selected preset chat based on an actual demand, so as to determine at least one second user participating in the virtual resource transfer operation.

As an implementable manner, the chat list further includes a preset chat initiation control. The first user may initiate a new chat based on the chat initiation control and determine at least one second user based on the new chat.

Optionally, in response to a trigger operation of the first user on the chat initiation control, a preset second user list is displayed. In response to the selection operation of the first user in the second user list, at least one second user currently selected by the first user is determined as the at least one second user to exchange the virtual resource with.

According to the virtual resource transfer method provided in this embodiment, a chat list is presented in response to the virtual resource transfer operation triggered by the first user in the media content presentation page, so that at least one second user participating in the virtual resource transfer operation may be quickly determined based on the chat list, which enriches interaction manners in the media content presentation page and improves the user experience.

Furthermore, based on any one of the above embodiments, step 102 includes:
in response to a trigger operation of the first user on the associated control corresponding to the preset chat, displaying a preset virtual resource determination page.

Alternatively, the second user list includes a preset creation control, and the displaying a preset virtual resource determination page includes:
in response to a trigger operation of the first user on the creation control, displaying a preset virtual resource determination page.

In this embodiment, after the chat list is presented, the first user may determine at least one second user through a trigger operation on the associated control corresponding to the preset chat. Furthermore, in response to the trigger operation, the preset virtual resource determination page may also be displayed, so that the first user may determine a virtual resource in the virtual resource determination page.

Optionally, the creation control may be provided in the second user list. After selecting the at least one second user in the second user list, the first user may trigger the creation control to create a chat with the at least one second user. Furthermore, in response to the trigger operation of the first user on the creation control, the preset virtual resource determination page may be displayed, so that the first user may determine the virtual resource in the virtual resource determination page.

Fig. 9 is a schematic diagram of another interface interaction according to an embodiment of the present disclosure. As shown in Fig. 9, the first user may perform a media content stream browsing operation in a media content presentation page 91. In response to a switching operation triggered by the first user, target media content 92 may be presented in the media content presentation page 91. The target media content 92 is generated and posted by a third user based on a virtual resource exchange result, and the media content presentation page 91 includes an trigger control 93 associated with a virtual resource exchange operation. The trigger control 93 may include prompt content of "exchange virtual resources". In response to a trigger operation of the first user on the trigger control 93, a preset chat list 94 may be displayed, where the chat list 94 includes an associated control 95 corresponding to at least one preset chat and a preset chat initiation control 96, and the preset chat is a chat corresponding to the first user and at least one second user. The user may determine at least one second user in the preset chat associated with any associated control 95 through a trigger operation on the associated control 95. Alternatively, the user may display a second user list through a trigger operation on the chat initiation control 96, select at least one second user in the second user list, and initiate a preset chat with the at least one second user.

According to the virtual resource transfer method provided in this embodiment, the virtual resource determination page is displayed after the at least one second user is determined based on the trigger operation of the user in the chat list, so that the first user may quickly determine the virtual resource in the virtual resource determination page and the efficiency of virtual resource transfer is improved.

Optionally, based on any one of the above embodiments, the step 101 includes:
displaying a chat page corresponding to a preset chat and presenting, in the chat page, an exchange control associated with a virtual resource sent by a second user; and
receiving a trigger operation on the exchange control.

In this embodiment, any second user in the preset chat may initiate the virtual resource transfer operation and, after determining the exchange virtual resource, post the exchange control associated with the virtual resource transfer operation in the chat page.

Furthermore, when the first user is a user selected by the second user to participate in the virtual resource transfer operation, the first user may participate in the virtual resource transfer operation initiated by the second user by triggering the exchange control.

According to the virtual resource transfer method provided in this embodiment, the exchange control is presented in the chat page, so that the first user may perform the trigger operation on the exchange control to quickly participate in the virtual resource transfer operation, which enriches exchange manners of the virtual resource transfer operation and improves the user experience.

Furthermore, based on any one of the above embodiments, after step 103, the method further includes:
displaying a preset view control on the exchange control.

Step 104 includes:
in response to meeting a preset exchange condition, switching to display a preset open control on the exchange control.

In this embodiment, in order to further enrich the content presented in the chat page, when the preset exchange condition is met, a display state of the exchange control may also be switched.

Optionally, when the preset exchange condition is not met, the preset view control may be displayed on the exchange control. Thus, the second user may determine the exchange virtual resource through the trigger operation on the exchange control, so as to participate in the virtual resource transfer operation.

When the preset exchange condition is met, the preset open control may be switched to for display on the exchange control, so that the user participating in the virtual resource may trigger the open control to view the virtual resource transfer result.

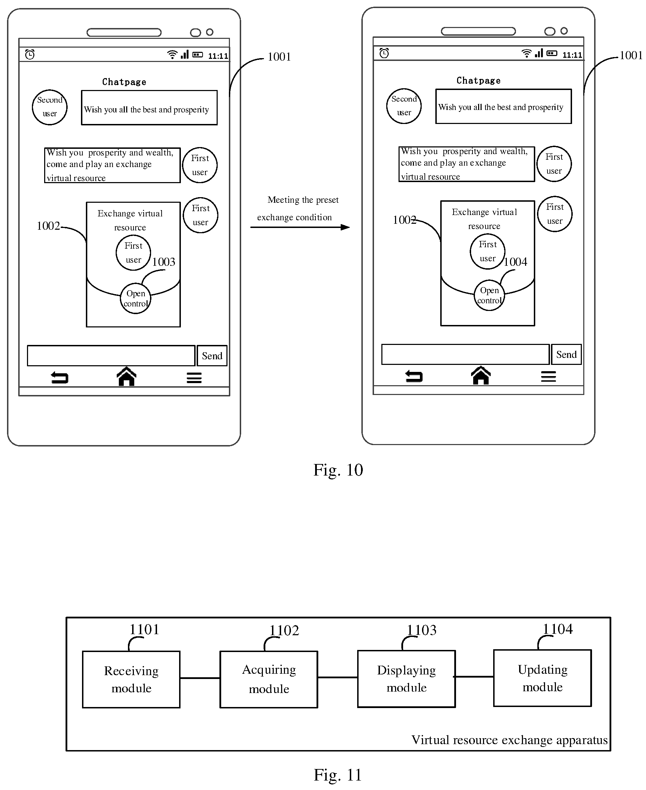

Fig. 10 is a schematic diagram of another interface interaction according to an embodiment of the present disclosure. As shown in Fig. 10, the exchange control 1002 may be displayed in the chat page 1001, and the preset view control 1003 may be displayed on the exchange control 1002. When the preset exchange condition is met, the preset open control 1004 may be switched to for display on the exchange control 1002.

According to the virtual resource transfer method provided in this embodiment, the presentation style of the exchange control is switched based on the preset exchange condition, so that the content presented in the chat page may be enriched. Furthermore, the second user may quickly determine the exchange virtual resource based on the exchange control, so as to participate in the virtual resource exchange operation.

Fig. 11 is a schematic diagram of a structure of a virtual resource exchange apparatus according to an embodiment of the present disclosure. As shown in Fig. 11, the apparatus includes: a receiving module 1101, an acquiring module 1102, a displaying module 1103, and an updating module 1104. The receiving module 1101 is configured to receive a virtual resource exchange operation triggered by a first user. The acquiring module 1102 is configured to, in response to the virtual resource exchange operation, display a preset virtual resource determination page and acquire a virtual resource determined by the first user in the virtual resource determination page. The displaying module 1103 is configured to display, in a chat page corresponding to a preset chat, an exchange control associated with the virtual resource exchange operation, where the preset chat is a chat corresponding to the first user and at least one second user, and the exchange control is configured to acquire at least one exchange virtual resource determined by the second user in response to a trigger operation of the at least one second user in the preset chat. The updating module 1104 is configured to, in response to meeting a preset exchange condition, update and display the exchange control based on a virtual resource exchange event, where the virtual resource exchange event is executed based on the virtual resource and a target exchange virtual resource in the at least one exchange virtual resource.

Furthermore, based on any one of the above embodiments, the acquiring module is configured to: display a random virtual resource in a preset display region in the virtual resource determination page, where the random virtual resource is randomly determined from a plurality of preset virtual resources; and in response to a trigger operation of the first user on a preset determination control in the virtual resource determination page, determine the random virtual resource as the virtual resource. Alternatively, the acquiring module is configured to a preset virtual resource input control in the virtual resource determination page; and determine a virtual resource input by the first user based on the virtual resource input control as the virtual resource.

Furthermore, based on any one of the above embodiments, the acquiring module is further configured to: display a preset switching control in the virtual resource determination page; and in response to a trigger operation of the first user on the switching control, randomly switch to present another preset virtual resource in the display region.

Furthermore, based on any one of the above embodiments, the apparatus further includes: a displaying module, configured to, in response to meeting a preset exchange condition, in response to a trigger operation of the first user on the exchange control, display a target second user determined from the at least one second user and a target exchange virtual resource determined by the target second user.

Furthermore, based on any one of the above embodiments, the displaying module is configured to perform at least one of the following: in response to a display time of the exchange control matching a preset exchange time, in response to the trigger operation of the first user on the exchange control, display the target second user determined from the at least one second user and the target exchange virtual resource determined by the target second user; in response to all second users participating in the virtual resource exchange event determining exchange virtual resources based on the exchange control, in response to the trigger operation of the first user on the exchange control, display the target second user determined from the at least one second user and the target exchange virtual resource determined by the target second user; or in response to an end operation triggered by the first user based on the exchange control, in response to the trigger operation of the first user on the exchange control, display the target second user determined from the at least one second user and the target exchange virtual resource determined by the target second user.

Furthermore, based on any one of the above embodiments, the apparatus further includes: a displaying module, configured to display an exchange record, where the exchange record includes an exchange relationship and an exchange virtual resource that correspond to at least one user participating in the virtual resource exchange event.

Furthermore, based on any one of the above embodiments, the apparatus further includes: a determining module, configured to determine a difference between the virtual resource and a target exchange virtual resource; and a presenting module, configured to present presentation content matching the difference, where the presentation content includes text content and/or pattern content.

Furthermore, based on any one of the above embodiments, the apparatus further includes: a displaying module, configured to display a content collection page in response to a trigger operation of the first user on a preset posting control; an acquiring module, configured to acquire media content generated by the first user in the content collection page; a generating module, configured to generate target media content based on the media content and the exchange result; and a posting module, configured to post the target media content in response to a posting operation triggered by the first user, where the target media content includes an exchange control associated with the virtual resource trigger operation.

Furthermore, based on any one of the above embodiments, identification information of at least one user currently participating in the virtual resource exchange operation is displayed on the exchange control. 10. The method according to any one of claims 1 to 8, where the chat page includes a preset trigger control. The receiving module is configured to: display the chat page, and receive a trigger operation of the first user on the preset trigger control in the chat page.

Furthermore, based on any one of the above embodiments, the apparatus further includes: a determining module, configured to determine at least one second user to exchange a virtual resource with in response to the virtual resource exchange operation triggered by the first user.

Furthermore, based on any one of the above embodiments, the acquiring module is configured to: in response to the virtual resource exchange operation triggered by the first user, determine all second users corresponding to the preset chat as the at least one second user. Alternatively, the acquiring module is configured to: in response to the virtual resource exchange operation triggered by the first user, display a second user list corresponding to the preset chat; and determine at least one second user to exchange the virtual resource with based on a selection operation triggered by the first user in the second user list.

Furthermore, based on any one of the above embodiments, the receiving module is configured to: present a preset media content stream in a preset media content presentation page; present target media content in the media content presentation page in response to a switching operation triggered by the first user, where the target media content is generated and posted by a third user based on a virtual resource exchange result, and the media content presentation page includes a trigger control associated with a virtual resource exchange operation; and receive a trigger operation of the first user on the trigger control.

Furthermore, based on any one of the above embodiments, the apparatus further includes: a determining module, configured to determine at least one second user to exchange the virtual resource with in response to the virtual resource exchange operation.

Furthermore, based on any one of the above embodiments, the apparatus further includes: a displaying module, configured to display a preset chat list in response to the virtual resource exchange operation, where the chat list includes an associated control corresponding to at least one preset chat and a preset chat initiation control, and the preset chat is a chat between the first user and the at least one second user. The acquiring module is configured to: in response to a trigger operation of the first user on the associated control corresponding to any preset chat, determine at least one second user corresponding to the preset chat as the at least one second user to exchange the virtual resource with. Alternatively, the acquiring module is configured to: in response to a trigger operation of the first user on the chat initiation control, display a preset second user list; and in response to a selection operation of the first user in the second user list, determine at least one second user currently selected by the first user as the at least one second user to exchange the virtual resource with.

Furthermore, based on any one of the above embodiments, the acquiring module is configured to: in response to the trigger operation of the first user on the associated control corresponding to the preset chat, display the preset virtual resource determination page. Alternatively, the second user list includes a preset creation control, and the acquiring module is configured to: in response to a trigger operation of the first user on the creation control, display the preset virtual resource determination page.

Furthermore, based on any one of the above embodiments, the receiving module is configured to: display a chat page corresponding to a preset chat and present, in the chat page, an exchange control associated with a virtual resource sent by a second user; and receive a trigger operation on the exchange control.

Furthermore, based on any one of the above embodiments, the apparatus further includes: a displaying module, configured to display a preset view control on the exchange control. The updating module is configured to: in response to meeting a preset exchange condition, switch to display a preset open control on the exchange control.

The device provided in this embodiment may be used to implement the technical solutions of the above method embodiments, and the implementation principles and technical effects thereof are similar, and details are not described herein again in this embodiment.

In order to implement the above embodiments, an embodiment of the present disclosure further provides a computer-readable storage medium, where a computer-executed instruction is stored in the computer-readable storage medium, and the computer-executed instruction, when executed by a processor, implements the virtual resource exchange method according to any one of the above embodiments.

In order to implement the above embodiments, an embodiment of the present disclosure further provides a computer program product, including a computer program, where the computer program, when executed by a processor, implements the virtual resource exchange method according to any one of the above embodiments.

In order to implement the above embodiments, an embodiment of the present disclosure further provides an electronic device, including: a processor and a memory;
where the memory stores a computer-executed instruction; and
the processor executes the computer-executed instruction stored in the memory, and the computer-executed instruction, upon execution by the processor, causes the processor to implement the virtual resource exchange method according to any one of the above embodiments.

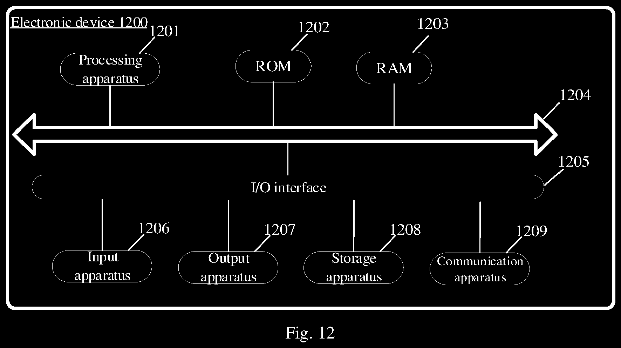

Fig. 12 is a schematic diagram of a structure of an electronic device according to an embodiment of the present disclosure. The electronic device 1200 may be a terminal device or a server. The terminal device may include, but is not limited to, mobile terminals such as a mobile phone, a notebook computer, a digital broadcasting receiver, a personal digital assistant (PDA), a tablet computer, a portable media player (PMP), and a vehicle-mounted terminal (such as a vehicle navigation terminal), and fixed terminals such as a digital TV and a desktop computer. The electronic device shown in Fig. 12 is merely an example and should not impose any limitation on the function and scope of use of the embodiments of the present disclosure.

As shown in Fig. 12, the electronic device 1200 may include a processing apparatus 1201 (such as a central processing unit and a graphics processing unit), which may perform various suitable actions and processing according to a program stored in a read-only memory (ROM) 1202 or a program loaded from a storage apparatus 1208 into a random-access memory (RAM) 1203. The RAM 1203 further stores various programs and data required for operations of the electronic device 1200. The processing apparatus 1201, the ROM 1202, and the RAM 1203 are interconnected by means of a bus 1204. An input/output (I/O) interface 1205 is also connected to the bus 1204.

Usually, the following apparatuses may be connected to the I/O interface 1205: an input apparatus 1206 including, for example, a touch screen, a touchpad, a keyboard, a mouse, a camera, a microphone, an accelerometer, and a gyroscope; an output apparatus 1207 including, for example, a liquid crystal display (LCD), a speaker, and a vibrator; a storage apparatus 1208 including, for example, a magnetic tape and a hard disk; and a communication apparatus 1209. The communication apparatus 1209 may allow the electronic device 1200 to be in wireless or wired communication with other devices to exchange data. Although Fig. 12 shows the electronic device 1200 with various apparatuses, it should be understood that not all the apparatuses shown herein need to be implemented or provided. Alternatively, more or fewer apparatuses may be implemented or provided.

In particular, according to embodiments of the present disclosure, the process described above with reference to the flowchart may be implemented as a computer software program. For example, the embodiments of the present disclosure include a computer program product, which includes a computer program carried on a computer-readable medium, where the computer program contains program code for performing the method shown in the flowchart. In such an embodiment, the computer program may be downloaded and installed from a network via the communication apparatus 1209, or installed from the storage apparatus 1208, or installed from the ROM 1202. When the computer program is executed by the processing apparatus 1201, the functions defined in The method according to the embodiments of the present disclosure are executed.

It should be noted that the above computer-readable medium in the present disclosure may be a computer-readable signal medium, a computer-readable storage medium, or any combination thereof. The computer-readable storage medium may be, for example, but is not limited to, an electrical, magnetic, optical, electromagnetic, infrared, or semiconductor system, apparatus, device, or any combination thereof. More specific examples of the computer-readable storage medium may include, but are not limited to, an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that contains or stores a program, which may be used by or in combination with an instruction execution system, apparatus, or device. In the present disclosure, the computer-readable signal medium may include a data signal propagated on a baseband or as a part of a carrier, and computer-readable program code is carried in the data signal. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium, and the computer-readable signal medium may send, propagate, or transmit the program for use by or in combination with the instruction execution system, apparatus, or device. The program code contained on the computer-readable medium may be transmitted in any suitable medium, including, but not limited to, a wire, an optical cable, a radio frequency (RF), or any suitable combination thereof.

The above computer-readable medium may be contained in the above electronic device, or it may exist alone without being assembled into the electronic device.

The above computer-readable medium carries one or more programs, and the one or more programs, when executed by the electronic device, cause the electronic device to perform the method shown in the above embodiments.

Computer program code for performing the operations of the present disclosure may be written in one or more programming languages or a combination thereof. The above programming languages include object-oriented programming languages such as Java, Smalltalk, and C++, and further include conventional procedural programming languages such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case involving the remote computer, the remote computer may be connected to the computer of the user through any kind of network, including a local area network (LAN) or a wide area network (WAN), or it may be connected to an external computer (for example, connected through the Internet with the aid of an Internet service provider).

The flowchart and block diagram in the drawings illustrate the possibly implemented architectures, functions, and operations of the system, the method, and the computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by software or hardware. Here, the name of a unit does not constitute a limitation on the unit itself under certain circumstances. For example, the first acquiring unit may also be described as "a unit for acquiring at least two internet protocol addresses".

The functions described above herein may be performed at least in part by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus or device. The machine-readable medium may be a machine-readable signal medium or a machine-readable storage medium. The machine-readable medium may include, but is not limited to, an electrical, magnetic, optical, electromagnetic, infrared, or semiconductor system, apparatus, or device, or any suitable combination of the above. More specific examples of the machine-readable storage medium would include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

According to one or more embodiments of the present disclosure, a virtual resource exchange method is provided, including:
receiving a virtual resource exchange operation triggered by a first user;
in response to the virtual resource exchange operation, displaying a preset virtual resource determination page and acquiring a virtual resource determined by the first user in the virtual resource determination page;
displaying, in a chat page corresponding to a preset chat, an exchange control associated with the virtual resource exchange operation, where the preset chat is a chat corresponding to the first user and at least one second user, and the exchange control is configured to acquire at least one exchange virtual resource determined by the second user in response to a trigger operation of the at least one second user in the preset chat; and
in response to meeting a preset exchange condition, updating and displaying the exchange control based on a virtual resource exchange event, where the virtual resource exchange event is executed based on the virtual resource and a target exchange virtual resource in the at least one exchange virtual resource.

According to one or more embodiments of the present disclosure, the acquiring the virtual resource determined by the first user in the virtual resource determination page includes:
displaying a random virtual resource in a preset display region in the virtual resource determination page, where the random virtual resource is randomly determined from a plurality of preset virtual resources;
in response to a trigger operation of the first user on a preset determination control in the virtual resource determination page, determining the random virtual resource as the virtual resource;
or, the acquiring the virtual resource determined by the first user in the virtual resource determination page includes:
a preset virtual resource input control in the virtual resource determination page; and
determining a virtual resource input by the first user based on the virtual resource input control as the virtual resource.

According to one or more embodiments of the present disclosure, after displaying the random virtual resource in the preset display region in the virtual resource determination page, the method further includes:
displaying a preset switching control in the virtual resource determination page; and
in response to a trigger operation of the first user on the switching control, randomly switching to present another preset virtual resource in the display region.

According to one or more embodiments of the present disclosure, after updating and displaying the exchange control based on the virtual resource exchange event in response to meeting the preset exchange condition, the method further includes:
in response to meeting a preset exchange condition, in response to a trigger operation of the first user on the exchange control, displaying a target second user determined from the at least one second user and a target exchange virtual resource determined by the target second user.

According to one or more embodiments of the present disclosure, the in response to meeting a preset exchange condition, in response to a trigger operation of the first user on the exchange control, displaying a target second user determined from the at least one second user and a target exchange virtual resource determined by the target second user includes at least one of the following:
in response to the display time of the exchange control matching a preset exchange time, in response to the trigger operation of the first user on the exchange control, displaying the target second user determined from the at least one second user and the target exchange virtual resource determined by the target second user;
in response to all second users participating in the virtual resource exchange event determining exchange virtual resources based on the exchange control, in response to the trigger operation of the first user on the exchange control, displaying the target second user determined from the at least one second user and the target exchange virtual resource determined by the target second user; and
in response to an end operation triggered by the first user based on the exchange control, in response to the trigger operation of the first user on the exchange control, displaying the target second user determined from the at least one second user and the target exchange virtual resource determined by the target second user.

According to one or more embodiments of the present disclosure, after displaying the target second user determined from the at least one second user and the target exchange virtual resource determined by the target second user, the method further includes:
displaying an exchange record, where the exchange record includes an exchange relationship and an exchange virtual resource that correspond to at least one user participating in the virtual resource exchange event.

According to one or more embodiments of the present disclosure, the method further includes:
determining a difference between the virtual resource and the target exchange virtual resource; and
presenting presentation content matching the difference, where the presentation content includes text content and/or pattern content.

According to one or more embodiments of the present disclosure, after displaying the target second user determined from the at least one second user and the target exchange virtual resource determined by the target second user, the method further includes:
in response to a trigger operation of the first user on a preset posting control, displaying a content collection page;
acquiring media content generated by the first user in the content collection page;
generating target media content based on the media content and the exchange result; and
in response to a posting operation triggered by the first user, posting the target media content, where the target media content includes a trigger control associated with the virtual resource exchange operation.

According to one or more embodiments of the present disclosure, identification information of at least one user currently participating in the virtual resource exchange operation is displayed on the exchange control.

According to one or more embodiments of the present disclosure, the chat page includes a preset trigger control; and
the receiving the virtual resource exchange operation triggered by the first user includes:
displaying the chat page; and
receiving a trigger operation of the first user on the preset trigger control in the chat page.

According to one or more embodiments of the present disclosure, the method further includes:
determining at least one second user to exchange a virtual resource with in response to the virtual resource exchange operation triggered by the first user.

According to one or more embodiments of the present disclosure, determining the at least one second user to exchange the virtual resource with in response to the virtual resource exchange operation triggered by the first user includes:
in response to the virtual resource exchange operation triggered by the first user, determining all second users corresponding to the preset chat as the at least one second user;
or, determining the at least one second user to exchange the virtual resource with in response to the virtual resource exchange operation triggered by the first user includes:
in response to the virtual resource exchange operation triggered by the first user, displaying a second user list corresponding to the preset chat; and
determining at least one second user to exchange the virtual resource with based on a selection operation triggered by the first user in the second user list.

According to one or more embodiments of the present disclosure, the receiving the virtual resource exchange operation triggered by the first user includes:
presenting a preset media content stream in a preset media content presentation page;
presenting target media content in the media content presentation page in response to a switching operation triggered by the first user, where the target media content is generated and posted by a third user based on a virtual resource exchange result, and the media content presentation page includes a trigger control associated with the virtual resource exchange operation; and
receiving a trigger operation of the first user on the trigger control.

According to one or more embodiments of the present disclosure, after receiving the virtual resource exchange operation triggered by the first user, the method further includes:
determining at least one second user to exchange a virtual resource with in response to the virtual resource exchange operation.

According to one or more embodiments of the present disclosure, after receiving the trigger operation of the first user on the trigger control, the method further includes:
in response to the virtual resource exchange operation, displaying a preset chat list, where the chat list includes an associated control corresponding to at least one preset chat and a preset chat initiation control, and the preset chat is a chat between the first user and the at least one second user;
determining the at least one second user to exchange the virtual resource with in response to the virtual resource exchange operation includes:
in response to a trigger operation of the first user on the associated control corresponding to any preset chat, determining at least one second user corresponding to the preset chat as the at least one second user to exchange the virtual resource with;
or, determining the at least one second user to exchange the virtual resource with in response to the virtual resource exchange operation includes:
in response to a trigger operation of the first user on the chat initiation control, displaying a preset second user list; and
in response to a selection operation of the first user in the second user list, determining at least one second user currently selected by the first user as the at least one second user to exchange the virtual resource with.

According to one or more embodiments of the present disclosure, the displaying the preset virtual resource determination page includes:
in response to the trigger operation of the first user on the associated control corresponding to the preset chat, displaying the preset virtual resource determination page;
or, the second user list includes a preset creation control, and the displaying the preset virtual resource determination page includes:
in response to a trigger operation of the first user on the creation control, displaying the preset virtual resource determination page.

According to one or more embodiments of the present disclosure, the receiving the virtual resource exchange operation triggered by the first user includes:
displaying a chat page corresponding to a preset chat, presenting, in the chat page, an exchange control associated with a virtual resource sent by a second user; and
receiving a trigger operation on the exchange control.

According to one or more embodiments of the present disclosure, after displaying, in the chat page corresponding to the preset chat, the exchange control associated with the virtual resource exchange operation, the method further includes:
displaying a preset view control on the exchange control; and
the in response to meeting the preset exchange condition, updating and displaying the exchange control based on the virtual resource exchange event includes:
in response to meeting the preset exchange condition, switching to display a preset open control on the exchange control.

According to one or more embodiments of the present disclosure, a virtual resource exchange apparatus is provided, including:
a receiving module, configured to receive a virtual resource exchange operation triggered by a first user;
an acquiring module, configured to, in response to the virtual resource exchange operation, display a preset virtual resource determination page and acquire a virtual resource determined by the first user in the virtual resource determination page;
a displaying module, configured to display, in a chat page corresponding to a preset chat, an exchange control associated with the virtual resource exchange operation, where the preset chat is a chat corresponding to the first user and at least one second user, and the exchange control is configured to acquire at least one exchange virtual resource determined by the second user in response to a trigger operation of the at least one second user in the preset chat; and
an updating module, configured to, in response to meeting a preset exchange condition, update and display the exchange control based on a virtual resource exchange event, where the virtual resource exchange event is executed based on the virtual resource and a target exchange virtual resource in the at least one exchange virtual resource.

According to one or more embodiments of the present disclosure, the acquiring module is configured to:
display a random virtual resource in a preset display region in the virtual resource determination page, where the random virtual resource is randomly determined from a plurality of preset virtual resources;
in response to a trigger operation of the first user on a preset determination control in the virtual resource determination page, determine the random virtual resource as the virtual resource;
or, the acquiring module is configured to:
a preset virtual resource input control in the virtual resource determination page; and
determine a virtual resource input by the first user based on the virtual resource input control as the virtual resource.

According to one or more embodiments of the present disclosure, the acquiring module is further configured to:
display a preset switching control in the virtual resource determination page; and
in response to a trigger operation of the first user on the switching control, randomly switch to present another preset virtual resource in the display region.

According to one or more embodiments of the present disclosure, the apparatus further includes:
a displaying module, configured to, in response to meeting a preset exchange condition, in response to a trigger operation of the first user on the exchange control, display a target second user determined from the at least one second user and a target exchange virtual resource determined by the target second user.

According to one or more embodiments of the present disclosure, the displaying module is configured to perform at least one of the following:
in response to a display time of the exchange control matching a preset exchange time, in response to the trigger operation of the first user on the exchange control, display the target second user determined from the at least one second user and the target exchange virtual resource determined by the target second user;
in response to all second users participating in the virtual resource exchange event determining exchange virtual resources based on the exchange control, in response to the trigger operation of the first user on the exchange control, display the target second user determined from the at least one second user and the target exchange virtual resource determined by the target second user; and
in response to an end operation triggered by the first user based on the exchange control, in response to the trigger operation of the first user on the exchange control, display the target second user determined from the at least one second user and the target exchange virtual resource determined by the target second user.

According to one or more embodiments of the present disclosure, the apparatus further includes:
a displaying module, configured to display an exchange record, where the exchange record includes an exchange relationship and an exchange virtual resource that correspond to at least one user participating in the virtual resource exchange event.

According to one or more embodiments of the present disclosure, the apparatus further includes:
a determining module, configured to determine a difference between the virtual resource and a target exchange virtual resource; and
a presenting module, configured to present presentation content matching the difference, where the presentation content includes text content and/or pattern content.

According to one or more embodiments of the present disclosure, the apparatus further includes:
a displaying module, configured to display a content collection page in response to a trigger operation of the first user on a preset posting control;
an acquiring module, configured to acquire media content generated by the first user in the content collection page;
a generating module, configured to generate target media content based on the media content and the exchange result; and
a posting module, configured to post the target media content in response to a posting operation triggered by the first user, where the target media content includes a trigger control associated with the virtual resource exchange operation.

According to one or more embodiments of the present disclosure, identification information of at least one user currently participating in the virtual resource exchange operation is displayed on the exchange control.

According to one or more embodiments of the present disclosure, the chat page includes a preset trigger control; and
the receiving module is configured to:
display the chat page; and
receive a trigger operation of the first user on the preset trigger control in the chat page.

According to one or more embodiments of the present disclosure, the apparatus further includes:
a determining module, configured to determine at least one second user to exchange a virtual resource with in response to the virtual resource exchange operation triggered by the first user.

According to one or more embodiments of the present disclosure, the acquiring module is configured to:
in response to the virtual resource exchange operation triggered by the first user, determine all second users corresponding to the preset chat as the at least one second user;
or, the acquiring module is configured to:
in response to the virtual resource exchange operation triggered by the first user, display a second user list corresponding to the preset chat; and
determine at least one second user to exchange a virtual resource with based on a selection operation triggered by the first user in the second user list.

According to one or more embodiments of the present disclosure, the receiving module is configured to:
present a preset media content stream in a preset media content presentation page;
present target media content in the media content presentation page in response to a switching operation triggered by the first user, where the target media content is generated and posted by a third user based on a virtual resource exchange result, and the media content presentation page includes a trigger control associated with the virtual resource exchange operation; and
receive a trigger operation of the first user on the trigger control.

According to one or more embodiments of the present disclosure, the apparatus further includes:
a determining module, configured to determine at least one second user to exchange a virtual resource with in response to the virtual resource exchange operation.

According to one or more embodiments of the present disclosure, the apparatus further includes:
a displaying module, configured to display a preset chat list in response to the virtual resource exchange operation, where the chat list includes an associated control corresponding to at least one preset chat and a preset chat initiation control, and the preset chat is a chat between the first user and the at least one second user;
the acquiring module is configured to:
   in response to a trigger operation of the first user on the associated control corresponding to any preset chat, determine at least one second user corresponding to the preset chat as the at least one second user to exchange the virtual resource with;
   or, the acquiring module is configured to:
      in response to a trigger operation of the first user on the chat initiation control, display a preset second user list; and
      in response to a selection operation of the first user in the second user list, determine at least one second user currently selected by the first user as the at least one second user to exchange the virtual resource with.

According to one or more embodiments of the present disclosure, the acquiring module is configured to:
in response to the trigger operation of the first user on the associated control corresponding to the preset chat, display the preset virtual resource determination page;
or, the second user list includes a preset creation control, and the acquiring module is configured to:
   in response to a trigger operation of the first user on the creation control, display the preset virtual resource determination page.

According to one or more embodiments of the present disclosure, the receiving module is configured to:
display a chat page corresponding to a preset chat, present, in the chat page, an exchange control associated with a virtual resource sent by a second user; and
receive a trigger operation on the exchange control.

According to one or more embodiments of the present disclosure, the apparatus further includes:
a displaying module, configured to display a preset view control on the exchange control; and
the updating module is configured to:
   in response to meeting the preset exchange condition, switch to display a preset open control on the exchange control.

According to one or more embodiments of the present disclosure, an electronic device is provided, including: at least one processor and a memory;
where the memory stores a computer-executed instruction; and
the at least one processor executes the computer-executed instruction stored in the memory, and the computer-executed instruction, upon execution by the at least one processor, causes the at least one processor to implement the virtual resource exchange method according to any one of the above embodiments.

According to one or more embodiments of the present disclosure, a computer-readable storage medium is provided, where a computer-executed instruction is stored in the computer-readable storage medium, and the computer-executed instruction, when executed by a processor, implements the virtual resource exchange method according to any one of the above embodiments.

According to one or more embodiments of the present disclosure, a computer program product is provided, including a computer program, where the computer program, when executed by a processor, implements the virtual resource exchange method according to any one of the above embodiments.

The above description only illustrates preferred embodiments of the present disclosure and applied technical principles. Those skilled in the art should understand that the disclosed scope involved in the present disclosure is not limited to the technical solutions obtained by the specific combination of the above technical features, and shall also cover other technical solutions obtained by arbitrary combination of the above technical features or equivalent features thereof without departing from the above disclosed concept. For example, the above features and the technical features provided in the present disclosure (but not limited to) with similar functions may be replaced each other to form a technical solution.

Furthermore, although the various operations are depicted in a particular order, this should not be understood as requiring the operations to be performed in the particular order shown or in a sequential order. Under certain circumstances, multitasking and parallel processing may be advantageous. Similarly, although several specific implementation details are included in the above discussion, these should not be interpreted as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the subject matter has been described in a language specific to structural features and/or logical actions of the method, it should be understood that the subject matter defined in the appended claims is not necessarily limited to the specific features or actions described above. Conversely, the specific features and actions described above are merely exemplary forms for implementing the claims.

## Claims

1. A virtual resource exchange method, comprising:
receiving a virtual resource exchange operation triggered by a first user;
displaying a preset virtual resource determination page and acquiring a virtual resource determined by the first user in the virtual resource determination page in response to the virtual resource exchange operation;
displaying, in a chat page corresponding to a preset chat, an exchange control associated with the virtual resource exchange operation, wherein the preset chat is a chat corresponding to the first user and at least one second user, and the exchange control is configured to acquire at least one exchange virtual resource determined by the second user in response to a trigger operation of the at least one second user in the preset chat; and
updating and displaying the exchange control based on a virtual resource exchange event in response to meeting a preset exchange condition, wherein the virtual resource exchange event is executed based on the virtual resource and a target exchange virtual resource in the at least one exchange virtual resource.

2. The method according to claim 1, wherein acquiring the virtual resource determined by the first user in the virtual resource determination page comprises:
displaying a random virtual resource in a preset display region in the virtual resource determination page, wherein the random virtual resource is randomly determined from a plurality of preset virtual resources;
in response to a trigger operation of the first user on a preset determination control in the virtual resource determination page, determining the random virtual resource as the virtual resource;
or, acquiring the virtual resource determined by the first user in the virtual resource determination page comprises:
displaying a preset virtual resource input control in the virtual resource determination page; and
determining a virtual resource input by the first user based on the virtual resource input control as the virtual resource.

3. The method according to claim 2, wherein after displaying the random virtual resource in the preset display region in the virtual resource determination page, the method further comprises:
displaying a preset switching control in the virtual resource determination page; and
in response to a trigger operation of the first user on the switching control, randomly switching to present another preset virtual resource in the display region.

4. The method according to any one of claims 1 to 3, wherein after updating and displaying the exchange control based on the virtual resource exchange event in response to meeting the preset exchange condition, the method further comprises:
in response to meeting the preset exchange condition, in response to a trigger operation of the first user on the exchange control, displaying a target second user determined from the at least one second user and a target exchange virtual resource determined by the target second user.

5. The method according to claim 4, wherein in response to meeting the preset exchange condition, displaying the target second user determined from the at least one second user and the target exchange virtual resource determined by the target second user in response to the trigger operation of the first user on the exchange control comprises at least one of the following:
in response to a display time of the exchange control matching a preset exchange time, displaying the target second user determined from the at least one second user and the target exchange virtual resource determined by the target second user in response to the trigger operation of the first user on the exchange control;
in response to all second users participating in the virtual resource exchange event determining the exchange virtual resources based on the exchange control, displaying the target second user determined from the at least one second user and the target exchange virtual resource determined by the target second user in response to the trigger operation of the first user on the exchange control; and
in response to an end operation triggered by the first user based on the exchange control, displaying the target second user determined from the at least one second user and the target exchange virtual resource determined by the target second user in response to the trigger operation of the first user on the exchange control.

6. The method according to claim 4, wherein after displaying the target second user determined from the at least one second user and the target exchange virtual resource determined by the target second user, the method further comprises:
displaying an exchange record, wherein the exchange record comprises an exchange relationship and an exchange virtual resource that correspond to at least one user participating in the virtual resource exchange event.

7. The method according to claim 4, further comprising:
determining a difference between the virtual resource and the target exchange virtual resource; and
presenting presentation content matching the difference, wherein the presentation content comprises text content and/or pattern content.

8. The method according to claim 4, wherein after displaying the target second user determined from the at least one second user and the target exchange virtual resource determined by the target second user, the method further comprises:
displaying a content collection page in response to a trigger operation of the first user on a preset posting control;
acquiring media content generated by the first user in the content collection page;
generating target media content based on the media content and an exchange result; and
posting the target media content in response to a posting operation triggered by the first user, wherein the target media content comprises a trigger control associated with the virtual resource exchange operation.

9. The method according to any one of claims 1 to 8, wherein, wherein identification information of at least one user currently participating in the virtual resource exchange operation is displayed on the exchange control.

10. The method according to any one of claims 1 to 8, wherein the chat page comprises a preset trigger control; and
receiving the virtual resource exchange operation triggered by the first user comprises:
displaying the chat page; and
receiving a trigger operation of the first user on the preset trigger control in the chat page.

11. The method according to claim 10, further comprising:
determining at least one second user to exchange the virtual resource with in response to the virtual resource exchange operation triggered by the first user.

12. The method according to claim 11, wherein determining at least one second user to exchange the virtual resource with in response to the virtual resource exchange operation triggered by the first user comprises:
in response to the virtual resource exchange operation triggered by the first user, determining all second users corresponding to the preset chat as the at least one second user;
or, determining at least one second user to exchange the virtual resources with in response to the virtual resource exchange operation triggered by the first user comprises:
in response to the virtual resource exchange operation triggered by the first user, displaying a second user list corresponding to the preset chat; and
determining the at least one second user to exchange the virtual resource with based on a selection operation triggered by the first user in the second user list.

13. The method according to any one of claims 1 to 8, wherein receiving the virtual resource exchange operation triggered by the first user comprises:
presenting a preset media content stream in a preset media content presentation page;
presenting target media content in the media content presentation page in response to a switching operation triggered by the first user, wherein the target media content is generated and posted by a third user based on a virtual resource exchange result, and the media content presentation page comprises a trigger control associated with the virtual resource exchange operation; and
receiving a trigger operation of the first user on the trigger control.

14. The method according to claim 13, wherein after receiving the virtual resource exchange operation triggered by the first user, the method further comprises:
determining at least one second user to exchange a virtual resource with in response to the virtual resource exchange operation.

15. The method according to claim 14, wherein after receiving the trigger operation of the first user on the trigger control, the method further comprises:
displaying a preset chat list in response to the virtual resource exchange operation, wherein the chat list comprises an associated control corresponding to at least one preset chat and a preset chat initiation control, and the preset chat is a chat corresponding to the first user and the at least one second user;
determining the at least one second user to exchange virtual resources with in response to the virtual resource exchange operation comprises:
in response to a trigger operation of the first user on an associated control corresponding to a first preset chat, determining at least one second user corresponding to the first preset chat as the at least one second user to exchange the virtual resource with;
or, determining the at least one second user to exchange virtual resources with in response to the virtual resource exchange operation comprises:
in response to a trigger operation of the first user on the chat initiation control, displaying a preset second user list; and
in response to a selection operation of the first user in the second user list, determining at least one second user currently selected by the first user as the at least one second user to exchange the virtual resource with.

16. The method according to claim 15, wherein displaying the preset virtual resource determination page comprises:
in response to the trigger operation of the first user on the associated control corresponding to the preset chat, displaying the preset virtual resource determination page;
or, the second user list comprises a preset creation control, and displaying the preset virtual resource determination page comprises:
in response to a trigger operation of the first user on the creation control, displaying the preset virtual resource determination page.

17. The method according to any one of claims 1 to 8, wherein receiving the virtual resource exchange operation triggered by the first user comprises:
displaying the chat page corresponding to the preset chat and presenting an exchange control associated with a virtual resource sent by the second user in the chat page; and
receiving a trigger operation on the exchange control.

18. The method according to any one of claims 1 to 8, wherein after displaying, in the chat page corresponding to the preset chat, the exchange control associated with the virtual resource exchange operation, the method further comprises:
displaying a preset view control on the exchange control; and
updating and displaying the exchange control based on the virtual resource exchange event in response to meeting the preset exchange condition comprises:
switching to display a preset open control on the exchange control in response to meeting the preset exchange condition.

19. A virtual resource exchange apparatus, comprising:
a receiving module, configured to receive a virtual resource exchange operation triggered by a first user;
an acquiring module, configured to, display a preset virtual resource determination page and acquire a virtual resource determined by the first user in the virtual resource determination page in response to the virtual resource exchange operation;
a displaying module, configured to display, in a chat page corresponding to a preset chat, an exchange control associated with the virtual resource exchange operation, wherein the preset chat is a chat corresponding to the first user and at least one second user, and the exchange control is configured to acquire at least one exchange virtual resource determined by the second user in response to a trigger operation of the at least one second user in the preset chat; and
an updating module, configured to, update and display the exchange control based on a virtual resource exchange event in response to meeting a preset exchange condition, wherein the virtual resource exchange event is executed based on the virtual resource and a target exchange virtual resource in the at least one exchange virtual resource.

20. An electronic device, comprising: a processor and a memory;
wherein the memory stores a computer-executed instruction; and
the processor executes the computer-executed instruction stored in the memory, to causes the processor to implement the virtual resource exchange method of any one of claims 1 to 18.

21. A computer-readable storage medium, wherein a computer-executed instruction is stored in the computer-readable storage medium, and when the computer-executed instruction is executed by a processor, the virtual resource exchange method according to any one of claims 1 to 18 is implemented.

22. A computer program product, comprising a computer program, wherein when the computer program is executed by a processor, the virtual resource exchange method according to any one of claims 1 to 18 is implemented.
